# EUROPÄISCHE PATENTSCHRIFT

(11) **EP 0 327 995 B1**
(45) Veröffentlichungstag und Bekanntmachung des Hinweises auf die Patenterteilung: **07.09.1994**
(21) Anmeldenummer: 89101906.9
(22) Anmeldetag: 03.02.1989
(51) Int. Cl.: H04N 5/44

(54) **Wiedergabeverbesserung eines Bildsignals**
Display improvement of a picture signal
Amélioration de visualisation d'un signal d'image

(30) Priorität: 08.02.1988 DE 3803605
(43) Veröffentlichungstag der Anmeldung: 16.08.1989
(73) Patentinhaber: Deutsche Thomson-Brandt GmbH, 78010 Villingen-Schwenningen (DE)
(72) Erfinder: Hartnack, Wolfgang, Dipl.-Ing., D-3005 Hemmingen 1 (DE)
(74) Vertreter: Einsel, Robert, Dipl.-Ing.

(56) Entgegenhaltungen:
- GB-A- 2 135 850
- NTZ ARCHIV, Band 7, Heft 9, 1985, Seiten 219-229; Ch. HENTSCHEL:"Flimmerreduktionsverfahren zur Verbesserung der Fernseh-Bildwiedergabe"

## Beschreibung

Die Erfindung betrifft ein Verfahren sowie eine Schaltung zur Wiedergabeverbesserung eines Bildsignals.

Aus Funkschau 1987, Heft 11, Seite 99 ff sind verschiedene Wiedergabeverbesserungsverfahren für ein im Zeilensprungverfahren aufgezeichnetes Bild angegeben. Die dort beschriebenen Flimmerreduktionsverfahren weisen eine 100 Hz Teilbildfrequenz unter Beibehaltung des Zwischenzeilenverfahrens auf. Bei einem dort beschriebenen Flimmerreduktionsverfahren V1 werden die zu einem Vollbild gehörenden Teilbilder A1 und A2 wiederholt wiedergegeben. Dadurch wird das Kantenflackern auf 50 Hz erhöht und ist somit mit dem Auge nicht mehr wahrnehmbar. Auch wirken das Zeilenflimmern und das Zeilenwandern nicht mehr störend. Probleme treten prinzipbedingt bei der Wiedergabe von bewegten Bildinhalten auf. Durch die Wiederholung der Teilbilder A1 und A2 kommt es zu einer Verwürfelung der Bildphasen, so daß sich dieses Verfahren für bewegte Details nicht eignet.

Bei einem weiteren Verfahren V2 wird diese Bewegungsverwürfelung dadurch vermieden, indem die einzelnen Teilbilder wiederholt wiedergegeben werden. Diese Wiedergabe hat jedoch den Nachteil, daß wieder ein 25 Hz Kantenflackern auftreten kann. Zur Vermeidung von Großflächenflimmern sowie Kantenflackern kann ein Bewegungsdetektor eingesetzt werden.

Bei einem dritten Verfahren V3 werden die horizontalen Kanten im zweiten und dritten Teilbild verschliffen. Eine Kombination der Verfahren V1 mit V3 ergibt ein gutes Wiedergabebild bezüglich eines stationären Bildes sowie eines bewegten Bildes. Es ist jedoch ein besonders präziser Bewegungsdetektor erforderlich.

Ein weiteres Verfahren V4 arbeitet mit vertikaler und mit zeitlicher Interpolation. Ein Kantenflackern tritt hierbei nicht auf und eine Bewegungsverwürfelung wird vermieden. Bei schnellen Bewegungen kommt es jedoch zunehmend zu unscharfen Abbildungen bewegten Details.
In GB-A-2 135 850 wird ein Verfahren zur 2:1-Umsetzung von progressiven, von einer Filmabtastung stammenden Bildern beschrieben. Hierbei sind jedoch jeweils zwei aufeinanderfolgende Vollbilder identisch.

Der Erfindung liegt die Aufgabe zugrunde, eine Bildwiedergabe-Verbesserung für progressive Quellbilder anzugeben, bei der die Bildwiederholfrequenz verdoppelt wird und bei der die volle vertikale und horizontale Auflösung bei unbewegten Bildteilen erhalten bleibt, Großflächenflimmern, Bewegungsverwürfelung, Kantenflackern und Zeilenflimmern vermieden werden und Bewegungsrucken reduziert wird.
Diese Aufgabe wird durch die im Patentanspruch 1 angegebenen Maßnahmen gelöst. Vorteilhafte Weiterbildungen der Erfindung sind in den Unteransprüchen beschrieben.

Erfindungsgemäß wird ein Videosignal für die Wiedergabeverbesserung verwendet, welches keinen Zeilensprung hat. Es wird also eine Information Zeile für Zeile abgetastet und über einen Fernsehkanal an den Empfänger übertragen, und dort Zeile für Zeile als Vollbild auf den Bildschirm geschrieben. Auch bei diesem Aufzeichnungs- und Wiedergabeverfahren wird mit 50Hz Bildwiederholfrequenz gearbeitet. Da dieses Verfahren ohne Zeilensprung arbeitet, kommt es prinzipbedingt weder zu einem Kantenflackern noch zu einem Zeilenflimmern. Als mögliche qualitative Beeinträchtigung kann es jedoch wegen der relativ geringen Bildwiederholfrequenz von 50Hz zu einem Großflächenflimmern kommen. Eine wiederholte Wiedergabe des gesamten Vollbildes ist wegen eines erhöhten schaltungstechnischen Aufwandes nicht rentabel und würde in ungeradzahligen und geradzahligen Zeilen des wiederholten Vollbildes bei bewegten Bildteilen ein Bewegungsrucken verursachen. Aus diesem Grunde wird erfindungsgemäß vorgeschlagen, das Vollbild in zwei Halbbilder aufzuteilen. Diese Halbbilder werden dann abwechselnd wiederholt wiedergegeben, so daß eine Bildwechselfrequenz von 100 Hz erzielt wird. Dieses erfindungsgemäße Verfahren verarbeitet sowohl unbewegte als auch bewegte Bildanteile, wobei kein Bewegungsdetektor für die bewegten Bildanteile erforderlich ist, da nicht zwischen zwei verschiedenen Verfahren umgeschaltet werden muß. Für die Erzeugung der zwei Halbbilder wird das Originalbild in einen Vollbildspeicher eingespeichert. Jede 2n-1te Zeile bildet dann das erste Halbbild. Das zweite Halbbild wird aus der 2n-ten Zeile des aktuellen Originalbildes und der 2n-ten Zeile des vorangegangenen Originalbildes bildpunktweise interpolativ ermittelt.

Bei diesem Verfahren sind die Zeilen des ersten Halbbildes immer identisch mit den entsprechenden Zeilen des Originalbildes. Die Zeilen des zweiten Halbbildes sind im Falle eines statischen Bildes ebenfalls identisch mit den entsprechenden Zeilen des Originalbildes. Im Falle der Bewegung werden sie es aus dem arithmetischen Mittelwert der aktuellen und der entsprechenden vorangegegangenen Zeilen der Originalvollbilder gebildet.

Vorteilhaft bei stationären Bildinhalten ergibt sich aus der Mittelung für das zweite Halbbild eine Rauschverminderung mit dem Faktor Wurzel 2.

Nachstehend wird ein Ausführungsbeispiel an Hand der Zeichnung erläutert:
- Fig. 1: eine Schaltung zur Erzeugung der Halbbilder aus einem Vollbild,
- Fig. 2: ein zugehöriges Zeitdiagramm,
- Fig. 3: ein anderes Ausführungsbeispiel.

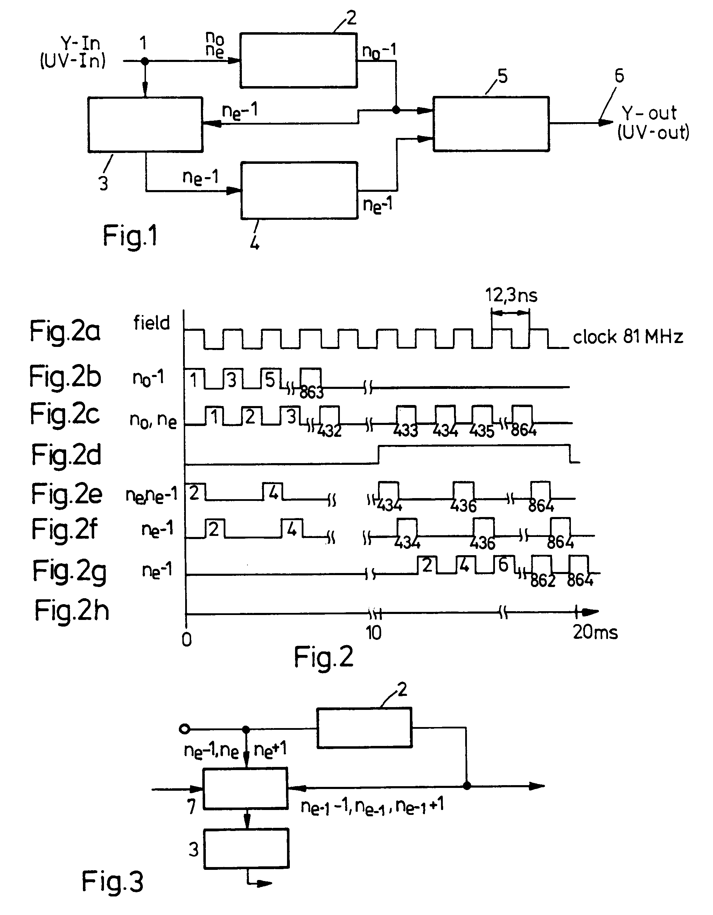

Fig. 1 gibt eine Schaltung wieder, die aus einem ankommenden Vollbild zwei Halbbilder erzeugt, welche während der Wiedergabezeit des Vollbildes von 20 Millisekunden je zweimal wiedergegeben werden. Das ankommende Vollbild wird bildpunktweise einem Vollbildspeicher 2 zugeführt. Gleichzeitig wird über die Eingangsklemme 1 jede 2n-te Zeile bildpunktweise einem Mittelwertbilder 3 zugeführt. Die im Vollbildspeicher 2 enthaltene 2n-te Zeile des vorangegangenen Vollbildes wird ebenfalls bildpunktweise dem Mittelwertbilder 3 zugeführt. Der Mittelwertbilder 3 ist vorzugsweise ein 8+8 Bitaddierer, bei dem die Mittelwertbildung dadurch geschieht, daß vom 9 Bitergebnis nur die acht höherwertigen Bit am Ausgang des Mittelwertbilders 3 abgegriffen werden. Das Ergebnis des Mittelwertbiders 3 wird bildpunktweise einem Halbbildspeicher 4 zugeführt. Die Ausgänge des Vollbildspeichers 2 und des Halbbildspeichers 4 werden einem Umschalter 5 zugeführt, an dessen Ausgang während der Wiedergabezeit eines Vollbildes die beiden Halbbilder abwechselnd abgreifbar sind.

An Hand der in Fig. 2 dargestellten Zeitabläufe wird die Wirkungsweise der Schaltung gemäß Fig. 1 erklärt. Zu Beginn der Bearbeitung sind sowohl der Vollbildspeicher als auch der Halbbildspeicher leer. Der Vollbildspeicher wird mit einem Systemtakt, der der Bildpunktrate von 81 MHz entspricht, beschrieben. Nach diesem ersten Schreibvorgang, der 20 Millisekunden dauert, enthält der Vollbildspeicher 2 ein erstes Vollbild A_{N}.

Fig. 2b - 2g ist die Zeitbasis auf die Zeilenfrequenz ausgerichtet, wobei die Zeilenfrequenz zur Taktrate verkoppelt ist. Gemäß Fig. 2b wird mit der ersten positiven Flanke des Systemtaktes gemäß Fig. 2a der erste Bildpunkt der ersten Zeile des Vollbildes A_{N} aus dem Vollbildspeicher ausgelesen. Mit der ersten negativen Flanke des Systemtaktes gemäß Fig. 2a wird dieser eben ausgelesene Bildpunkt von dem ersten Bildpunkt des nachfolgenden Vollbildes A_{N+1} überschrieben. Mit der darauffolgenden positiven Flanke wird der zweite Bildpunkt des Vollbildes A_{N} ausgelesen und mit der nächsten negativen Flanke der zweite Bildpunkt des Vollbildes A_{N+1} eingeschrieben. Der Auslesevorgang setzt sich fort, bis sämtliche ungeradzahligen Zeilen des Vollbildes A_{N} ausgelesen sind. Er dauert 10 Millisekunden. In dieser Zeit sind 432 Zeilen des Vollbildes A_{N+1} in den Vollbildspeicher 2 eingelegen. Während der folgenden 10 Millisekunden ist der Auslesevorgang aus dem Vollbildspeicher 2 entsprechend Fig. 2d durch den Umschalter 5 unterbrochen. Der Einlesevorgang wird fortgesetzt, bis sämtliche 864 aktive Zeichen des Vollbildes A_{N+1} in den Vollbildspeicher 2 eingelesen sind.

Gem. Fig. 2e werden die entsprechenden Bildpunkte der gradzahligen Zeilen 2n der Vollbilder A_{N}, A_{N+1} dem Mittelwertbildner 3 zugeführt, und zwar während der positiven Flanken des Systemtaktes. Aus den dem Mittelwertbildner 3 zugeführten gradzahligen Zeilen werden mit den negativen Flanken des Systemtaktes gem. Fig. 2a die Bildpunkte der Zeilen des zweiten Halbbildes erzeugt (Fig. 2f) und in den Halbbildspeicher 4 eingelesen. Im Zeitpunkt der Umschaltung des Umschalters 5 auf den Halbbildspeicher 4 sind die Hälfte der Zeilen des zweiten Halbbildes in den Halbbildspeicher 4 eingelesen. Für die folgenden zehn Millisekunden wird der Halbbildspeicher 4 weiterhin mit den restlichen Zeilen des zweiten Halbbildes beschrieben. Gleichzeitig werden die Zeilen des zweiten Halbbildes, beginnend mit der 2n-ten Zeile mit der doppelten Frequenz gem. Fig. 2g als die Einschreibfrequenz ausgelesen. Unmittelbar nach dem Einschreiben des letzten Bildpunktes der letzten Zeile des zweiten Halbbildes in den Halbbildspeicher 4 wird dieser als letzter Bildpunkt der letzten Ausgabezeile aus diesem Halbbildspeicher 4 ausgelesen.

Danach schaltet der Umschalter 5 wieder auf den Vollbildspeicher 2 um und der beschriebene Vorgang beginnt erneut.

Fig. 3 gibt ein anderes Ausführungsbeispiel zur Erzeugung der Halbbilder aus einem Vollbild wieder. Bei diesem Ausführungsbeispiel ist den Mittelwertbildner 3 ein Sortierer 7 vorgeschaltet, dem anstelle des Mittelwertbildners 3 die aktuellen, an den Systemtakt (Fig. 2a) verkoppelten Bildpunkte nₑ, nₑ₋₁ sowie der vorhergehende nₑ-1, nₑ₋₁-1 als auch der nachfolgende Bildpunkt nₑ₊₁, nₑ₋₁+1 einer geradzahligen Zeile des in den Vollbildspeicher 2 einzuschreibenden und eingeschriebenen Vollbildes zugeführt werden. Der Sortierer 7 hat die Aufgabe, aus diesen sechs Bildpunkten nₑ-1, nₑ, nₑ+1, nₑ₋₁-1, nₑ₋₁, nₑ₋₁+1 zwei für die Mittelwertbildung geeignete Werte, vorzugsweise den dritt- und viertgrößten Wert, zu selektieren und diese beiden Bildpunkte dem Mittelwertbildner 3 zuzuführen. Die weitere Verarbeitung erfolgt dann wie zu Fig. 1 beschrieben.

Dies Ausführungsbeispiel hat den Vorteil, daß die dem ersten Ausführungsbeispiel anhaftende Tiefpaßwirkung vermieden wird und Kanten im Übergangsbereich zwischen den Bildpunkten der aufeinanderfolgenden Bilder als solche darstellbar sind.

Vorzugsweise wird dieses Ausführungsbeispiel für die Luminanzkomponente Y des Bildsignals verwendet. Die Chrominanzkomponenten U,V werden als Bildpunkte nₑ₋₁ bzw. Vₑ und Vₑ₋₁ als Bildpunkte des umzuschreibenden und eingeschriebenen Bildes direkt dem Mittelwertbildner 3 zugeführt. Bei statischen Bildinhalten wird vorzugsweise jeder Bildpunkt (nₑ, nₑ₋₁) einer geradzahligen Zeile des einzuschreibenden und des umgeschriebenen Vollbildes dem Mittelwertbildner 3 zugeführt. Der Sortierer 7 wird durch ein Bewegungsdetektionssignal durchgeschaltet.

## Patentansprüche

1. Verfahren zur Progressiv-Interlace-Umsetzung, bei dem die Bildpunkte der zu einem ersten Ausgangs-Halbbild gehörenden Zeilen den Bildpunkten der Zeilen des progressiven Quellsignals entsprechen und die Bildpunkte der zu dem zweiten Ausgangs-Halbbild gehörenden Zeilen durch Kombination von entsprechenden Bildpunkten des aktuellen und des vorhergehenden progressiven Vollbilds ermittelt werden, **dadurch gekennzeichnet**, daß für jeden Bildpunkt der zu dem zweiten Ausgangs-Halbbild gehörenden Zeilen der räumlich entsprechende Bildpunkt (nₑ) aus dem aktuellen progressiven Vollbild und der räumlich entsprechende Bildpunkt (nₑ₋₁) aus dem vorhergehenden progressiven Vollbild und der in der entsprechenden Zeile vorhergehende (nₑ-1, nₑ₋₁-1) und nachfolgende (nₑ+1, nₑ₋₁+1) Bildpunkt dieser beiden Bildpunkte kombiniert werden, wobei als Ergebnis der Mittelwert (3) aus dem amplitudenmäßig drittgrößten und viertgrößten dieser sechs Bildpunktwerte verwendet wird.

2. Verfahren nach Anspruch 1, **dadurch gekennzeichnet,** daß bei statischen Bildinhalt für jeden Bildpunkt der zu dem zweiten Ausgangs-Halbbild gehörenden Zeilen nur der Amplitudenwert des räumlich entsprechenden Bildpunkts (nₑ) aus dem aktuellen progressiven Vollbild und des räumlich entsprechenden Bildpunkts (nₑ₋₁) aus dem vorhergehenden progressiven Vollbild zur Mittelwertbildung (3) verwendet wird.

3. Verfahren nach Anspruch 1 oder 2, **dadurch gekennzeichnet**, daß für Chrominanz-Bildpunkte der zu dem zweiten Ausgangs-Halbbild gehörenden Zeilen jeweils der Mittelwert aus den Amplitudenwerten des räumlich entsprechenden Bildpunkts (ne) aus dem aktuellen progressiven Vollbild und des räumlich entsprechenden Bildpunkts (nₑ₋₁) aus dem vorhergehenden progressiven Vollbild verwendet wird.

4. Vorrichtung zur Progressiv-Interlace-Umsetzung, bei der die Bildpunkte der zu einem ersten Ausgangs-Halbbild gehörenden Zeilen den Bildpunkten der Zeilen des progressiven Quellsignals entsprechen und die Bildpunkte der zu dem zweiten Ausgangs-Halbbild gehörenden Zeilen durch Kombination von entsprechenden Bildpunkten des aktuellen und des vorhergehenden progressiven Vollbilds ermittelt werden,
**gekennzeichnet durch:**
- erste Speichermittel (2) zur Speicherung der progressiven Vollbilder, deren Ausgangssignale Umschaltmitteln (5) und Sortiermitteln (7) zugeführt werden, wobei entsprechende Bildpunkte der progressiven Vollbilder den Sortiermitteln ebenfalls ohne Zwischenspeicherung in den ersten Speichermitteln zugeführt werden;
- die Sortiermittel ermitteln für jeden Bildpunkt der zu dem zweiten Ausgangs-Halbbild gehörenden Zeilen den Amplitudenwert des räumlich entsprechenden Bildpunkts (nₑ) aus dem aktuellen progressiven Vollbild und des räumlich entsprechenden Bildpunkts (nₑ₋₁) aus dem vorhergehenden progressiven Vollbild und die Amplitudenwerte des in der entsprechenden Zeile vorhergehenden (nₑ-1, nₑ₋₁-1) und nachfolgenden (nₑ+1, nₑ₋₁+1) Bildpunkts dieser beiden Bildpunkte und sortieren diese sechs Amplitudenwerte der Größe nach und führen den drittgrößten und den viertgrößten Mitteln zur Mittelwertbildung (3) zu, deren Ausgangssignal über zweite Speichermittel (4) ebenfalls den Umschaltmitteln (5) zugeführt werden;
- die Umschaltmittel geben als Ausgangssignale der zu dem ersten Ausgangs-Halbbild gehörenden Zeilen die in den ersten Speichermitteln (2) gespeicherten Bildpunktwerte und als Ausgangssignale der zu dem zweiten Ausgangs-Halbbild gehörenden Zeilen die in den zweiten Speichermitteln (4) gespeicherten Bildpunktwerte aus.

5. Vorrichtung nach Anspruch 4, **dadurch gekennzeichnet**, daß die Mittel zur Mittelwertbildung (3) aus einem 2x8Bit-Addierer bestehen.

6. Vorrichtung nach Anspruch 4 oder 5, **dadurch gekennzeichnet**, daß bei statischen Bildinhalt für jeden Bildpunkt der zu dem zweiten Ausgangs-Halbbild gehörenden Zeilen nur der Amplitudenwert des räumlich entsprechenden Bildpunkts (nₑ) aus dem aktuellen progressiven Vollbild und des räumlich entsprechenden Bildpunkts (nₑ₋₁) aus dem vorhergehenden progressiven Vollbild den Mitteln zur Mittelwertbildung (3) zugeführt werden.

## Claims

1. Method of progressive interlace conversion, in which the picture points of the lines belonging to a first output field correspond to the picture points of the lines of the progressive source signal and the picture points of the lines belonging to the second output field are determined by combination of corresponding picture points of the current and the preceding progressive frame, characterised in that for each picture point of the lines belonging to the second output field the spatially corresponding picture point (nₑ) from the current progressive frame and the spatially corresponding picture point (nₑ₋₁) from the preceding progressive frame and the preceding picture point (nₑ-1, nₑ₋₁-1) and the succeeding picture point (nₑ+1, nₑ₋₁+1) of these two picture points in the corresponding line are combined, wherein the mean value (3) of the third largest and fourth largest in amplitude of these six picture point values is used as a result.

2. Method according to Claim 1, characterised in that in the case of a static picture content for each picture point of the lines belonging to the second output field, only the amplitude value of the spatially corresponding picture point (nₑ) from the current progressive frame and that of the spatially corresponding picture point (nₑ₋₁) from the preceding progressive frame are used for formation of the mean value (3).

3. Method according to Claim 1 or 2, characterised in that for chrominance picture points of the lines belonging to the second output field, in each case the mean value of the amplitude values of the spatially corresponding picture point (nₑ) from the current progressive frame and that of the spatially corresponding picture point (nₑ₋₁) from the preceding progressive frame is used.

4. Device for progressive interlace conversion, in which the picture points of the lines belonging to a first output field correspond to the picture points of the lines of the progressive source signal and the picture points of the lines belonging to the second output field are determined by combination of corresponding picture points of the current and the preceding progressive frames, characterised by:
- first storage means (2) for storing the progressive frames, the output signals of which are supplied to switching means (5) and sorting means (7), corresponding picture points of the progressive frames being supplied to the sorting means also without intermediate storage in the first storage means,
- for each picture point of the lines belonging to the second output field the sorting means determine the amplitude value of the spatially corresponding picture point (nₑ) from the current progressive frame and of the spatially corresponding picture point (nₑ₋₁) from the preceding progressive frame and the amplitude values of the preceding picture point (nₑ-1, nₑ₋₁-1) and the succeeding picture point (nₑ+1, nₑ₋₁+1) of these two picture points in the corresponding line, and sort these six amplitude values according to magnitude and supply the third largest and the fourth largest to means for forming the mean values (3), the output signal of which is also supplied by way of two storage means (4) to the switching means (5);
- the switching means emit the picture point values stored in the first storage means (2) as output signals of the lines belonging to the first output field and emit the picture point values stored in the second storage means (4) as output signals of the lines belonging to the second output field.

5. Device according to Claim 4, characterised in that the means for forming the mean values (3) consist of a 2x8-bit adder.

6. Device according to Claim 4 or 5, characterised in that in the case of a static picture content for each picture point of the lines belonging to the second output field, only the amplitude value of the spatially corresponding picture point (nₑ) from the current progressive frame and that of the spatially corresponding picture point (nₑ₋₁) from the preceding progressive frame are supplied to the means for forming the mean values (3).

## Revendications

1. Procédé pour conversion d'entrelacement progressive dans lequel les points d'image des lignes qui font partie d'une première trame de sortie du signal de source progressif et les points d'image des lignes qui font partie de la seconde trame de sortie étant détectés par combinaison de points d'image correspondants de l'image progressive actuelle et de l'image progressive précédente, **caractérisé en ce** que pour chaque point d'image le point d'image (nₑ) de l'image progressive actuelle qui correspond spatialement aux lignes qui font partie de la seconde trame de sortie et le point d'image précédent (nₑ-1, nₑ₋₁-1) et le point d'image suivant (nₑ+1, nₑ₋₁+1) de ces deux points d'image dans la ligne correspondante sont combinés, la moyenne (3) de la troisième plus grande valeur et de la quatrième plus grande valeur en amplitude du point d'image de ces six valeurs de point d'image est utilisée comme résultat.

2. Procédé selon la revendication 1, **caractérisé en ce** que pour un contenu d'image statique pour chaque point d'image des lignes qui font partie de la seconde trame de sortie seulement la valeur de l'amplitude du point d'image correspondant spatialement (nₑ) de l'image progressive actuelle et du point d'image correspondant spatialement (nₑ₋₁) de l'image progressive précédente est utilisée pour la formation de la moyenne (3).

3. Procédé selon la revendication 1 ou 2, **caractérisé en ce** que pour les points d'image de chrominance des lignes qui font partie de la seconde trame de sortie respectivement la moyenne des valeurs d'amplitude du point d'image correspondant spatialement (nₑ) de l'image progressive actuelle et du point d'image correspondant spatialement (nₑ₋₁) de l'image progressive précédente est utilisée.

4. Dispositif pour conversion d'entrelacement progressive dans lequel les points d'image des lignes qui font partie d'une première trame de sortie du signal de source progressif et les points d'image des lignes qui font partie de la seconde trame de sortie étant détectés par combinaison de points d'image correspondants de l'image progressive actuelle et de l'image progressive précédente,
**caractérisé par** :
- des premiers moyens de mise en mémoire (2) pour la mise en mémoire des images progressives dont les signaux de sortie sont amenés à des moyens de commutation (5) et à des moyens de classement (7), des points d'image correspondants des images progressives étant amenés aux moyens de classement également sans mise en mémoire intermédiaire dans les premiers moyens de mémoire ;
- les moyens de classement détectent pour chaque point d'image des lignes qui font partie de la seconde trame de sortie la valeur d'amplitude du point d'image correspondant spatialement (nₑ) de l'image progressive actuelle et du point d'image correspondant spatialement (nₑ₋₁) de l'image progressive précédente et les valeurs d'amplitude du point d'image précédent (nₑ-1, nₑ₋₁-1) et du point d'image suivant (nₑ+1, nₑ₋₁+1) de ces deux points d'image dans la ligne correspondante et classent ces six valeurs d'amplitude selon la grandeur et amènent la troisième plus grande et la quatrième plus grande aux moyens pour la formation de la moyenne (3) dont le signal de sortie est également amené par des seconds moyens de mise en mémoire (4) aux moyens de commutation (5) ;
- les moyens de commutation sortent comme signaux de sortie des lignes qui font partie de la première trame de sortie les valerus de points d'image mémorisées dans les premiers moyens de mise en mémoire (2) et comme signaux de sortie des lignes qui font partie de la seconde trame de sortie les valeurs de points d'image mémorisées dans les seconds moyens de mise en mémoire (4).

5. Dispositif selon la revendication 4, **caractérisé en ce** que les moyens pour la formation de la moyenne (3) sont constitués par un additionneur 2x8 bits.

6. Dispositif selon la revendication 4 ou 5, **caractérisé en ce** que pour un contenu d'image statique pour chaque point d'image des lignes qui font partie de la seconde trame de sortie seulement la valeur de l'amplitude du point d'image correspondant spatialement (nₑ) de l'image progressive actuelle et du point d'image correspondant spatialement (nₑ₋₁) de l'image progressive précédente sont amenées aux moyens pour la formation de la moyenne (3).
